# EUROPEAN PATENT SPECIFICATION

(11) **EP 3 715 233 B1**
(45) Date of publication and mention of the grant of the patent: **29.06.2022**
(21) Application number: 20165966.1
(22) Date of filing: 26.03.2020
(51) Int. Cl.: B62J 15/00

(54) **ARRANGEMENT OF THE CONTROL UNIT ON THE REAR FENDER OF A SADDLE-TYPE VEHICLE**
ANORDNUNG DER STEUEREINHEIT AM HINTEREN KOTFLÜGEL EINES SATTELTYPFAHRZEUGS
AGENCEMENT DE L'UNITÉ DE COMMANDE SUR LE GARDE-BOUE ARRIÈRE D'UN VÉHICULE DE TYPE SELLE

(30) Priority: 29.03.2019 JP 2019068610
(43) Date of publication of application: 30.09.2020
(73) Proprietor: HONDA MOTOR CO., LTD., Minato-ku Tokyo 107-8556 (JP)
(72) Inventor: SHIMIZU, Koichiro, Wako-shi, Saitama 351-0193 (JP); YOKOUCHI, Kohei, Wako-shi, Saitama 351-0193 (JP); OISHI, Kenichi, Wako-shi, Saitama 351-0193 (JP)
(74) Representative: Feller, Frank

(56) References cited:
- EP-A1- 0 648 633
- EP-A2- 1 122 159
- JP-A- 2013 136 312
- JP-A- 2016 041 529

## Description

### Technical Field

The present invention relates to a straddle-type vehicle.

### Background Art

A straddle-type vehicle such as a motorcycle includes a body cover covering a vehicle body. Electric components such as an electronic control unit, a battery, and a relay box are disposed in a space surrounded by the body cover. For example, Patent Document 1 discloses a structure in which an electronic control unit is disposed in a space surrounded by a body cover above a rear fender and below a seat.

On the other hand, in the straddle-type vehicle such as a motorcycle, it is desired to make the entire vehicle body look compact, and it is known that the entire vehicle body looks compact by reducing the size of the body cover below the seat.

### Citation List

### Patent Document

Patent Document 1: JP-A-2007-062571
Patent Document 2: EP 1 122 159 A2
Patent Document 3: JP 2016 041529 A
Patent Document 4: EP 0 648 633 A1
Patent Document 5: JP 2013 136312 A

### Summary of Invention

### Technical Problem

In the straddle-type vehicle disclosed in Patent Document 1, it is difficult to reduce the size of the body cover below the seat since the electronic control unit, which is a particularly large component among electric components, is disposed in the space surrounded by the body cover above the rear fender and below the seat.

Patent Document 2 discloses a straddled-type vehicle according to the preamble of claim 1.

Patent Documents 3, 4 and 5 disclose further examples of straddle-type vehicles with control units disposed in the cover below the seat.

Accordingly, the present invention provides a straddle-type vehicle in which a body cover can be made compact and an entire vehicle body can be made to look compact.

### Solution to Problem

According to an embodiment of the present invention, there is provided a saddle-type vehicle including:
a pair of left and right body covers disposed below a seat on which an occupant sits and extending in an upper-lower direction and a front-rear direction;
a rear fender connected to lower end portions of both of the pair of left and right body covers and disposed above a rear wheel; and
an electronic control unit,
wherein the rear fender includes a rearward protruding portion protruding from the lower end portions of the pair of left and right body covers toward a rear side of the vehicle, and
wherein the electronic control unit is disposed inside the rearward protruding portion of the rear fender, wherein the rear fender includes: an upper portion supported by the lower end portions of the pair of left and right body covers, and including an opening which is formed such that at least a part of the rearward protruding portion opens downward; and a base portion including a bottom surface portion which is configured to close the opening of the upper portion, and wherein the electronic control unit is disposed on the base portion, wherein the bottom surface of the base portion includes a rearward descending portion inclined downward toward a rear end, and wherein the electronic control unit is disposed on an upper portion of the rearward descending portion.

### Advantageous Effects of Invention

According to the present invention, since the electronic control unit is disposed inside the rearward protruding portion of the rear fender, the body cover can be made compact and the entire vehicle body can be made to look compact.

### Brief Description of Drawings

Fig. 1 is a right side view of a motorcycle which is a straddle-type vehicle according to the present invention.
Fig. 2 is an enlarged left side view of a main part of a vehicle-body rear portion of the motorcycle shown in Fig. 1.
Fig. 3 is a left side view in which a vehicle-body cover at the vehicle-body rear portion of the motorcycle shown in Fig. 1 is partially cut along a plane passing through a center in a vehicle width direction.

### Description of Embodiments

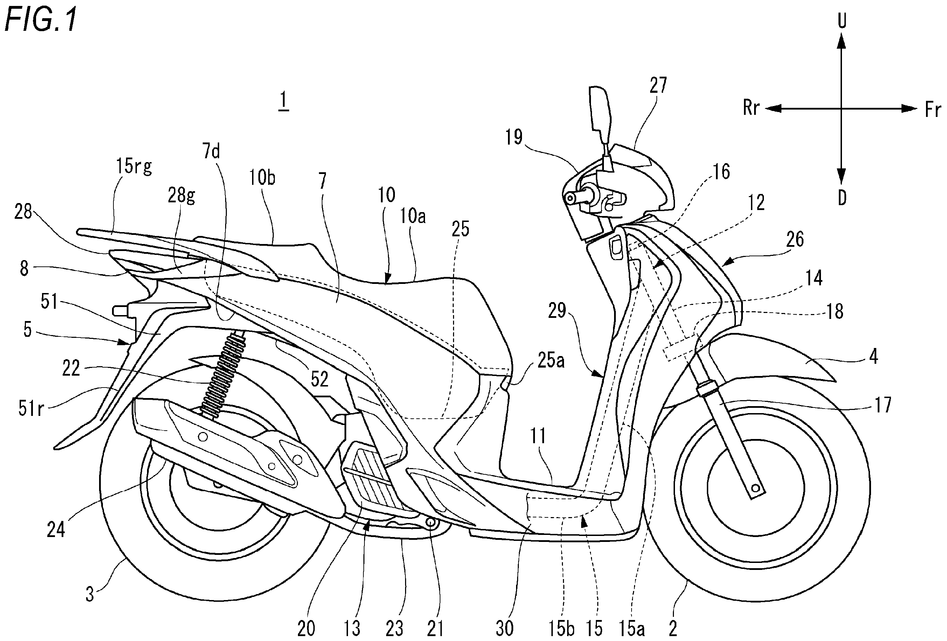

Hereinafter, a scooter-type motorcycle including a lid support structure according to an embodiment of the present invention will be described with reference to Figs. 1 to 3. The drawings should be seen in directions of reference numerals. In the following description, front, rear, left, right, upper, and lower directions are described according to the direction seen from a driver. In the drawings, a front side of the vehicle is denoted by Fr, a rear side is denoted by Rr, a left side is denoted by L, a right side is denoted by R, an upper side is denoted by U, and a lower side is denoted by D.

As shown in Fig. 1, a motorcycle 1 is a scooter-type saddle-type vehicle including a low step floor 11 on which an occupant sitting on a seat 10 puts feet. The motorcycle 1 includes a front wheel 2 in a front of a vehicle body frame 12, and a rear wheel 3 which is a driving wheel is pivotally supported by a unit swing engine 13 provided in a rear portion of the vehicle.

### <Frame Structure of Vehicle>

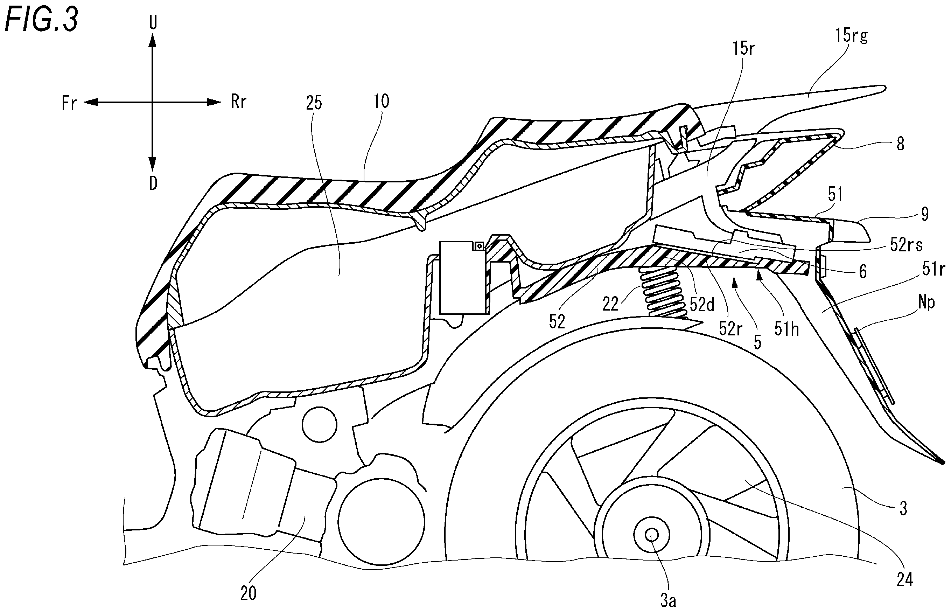

The vehicle body frame 12 includes a head pipe 14 provided at a front end, a main frame 15 extending downward from the head pipe 14 and then extending rearward, and a seat frame (not shown) extending from a rear end of the main frame 15 to a vehicle-body rear end portion in a rearward ascending manner. The main frame 15 includes a down frame portion 15a extending from a rear surface of the head pipe 14 in a rearward descending manner, an under frame portion 15b extending rearward from a lower end of the down frame portion 15a, and a rear frame portion 15r (see Fig. 3) extending rearward from the under frame portion 15b and extending obliquely upward.

A steering shaft 16 is pivotally supported in the head pipe 14, and a pair of left and right front forks 17 are supported by a bridge 18 provided at a lower end of a steering shaft 16. A handle 19 to be operated by an occupant is provided at an upper end of the steering shaft 16. The front wheel 2 is supported by lower end portions of the front forks 17.

### <Engine Structure>

The unit swing engine 13 is a unit swing type in which an engine 20 and a transmission case (not shown) containing a belt-type continuously variable transmission mechanism are integrated. The rear wheel 3 is rotationally supported by a rear end portion of the transmission case. The unit swing engine 13 is connected to a rear portion of the main frame 15 via a pivot shaft 21 provided in a front portion of the unit swing engine 13 and is swingable upward and downward about the pivot shaft 21. That is, the unit swing engine 13 also functions as a swing arm supporting the rear wheel 3.

A rear suspension 22 is spanned between a rear portion of the unit swing engine 13 and a rear portion of the vehicle body frame 12.

An exhaust pipe 23 of the engine 20 is drawn out from a cylinder head (not shown) and extends rearward and is connected to a muffler 24 on a right side of the rear wheel 3.

### <Structure around Seat>

An accommodation box 25 supported by the seat frame and capable of accommodating articles such as a helmet is provided above the engine 20. The accommodation box 25 is formed in a box shape with an opening on an upper surface, and the opening is closed by the seat 10.

The seat 10 is connected to a front end portion of the accommodation box 25 via a hinge portion 25a at a front end portion. Accordingly, the accommodation box 25 is opened and closed by turning the seat 10 around the hinge portion 25a. The seat 10 is locked in a state where the accommodation box 25 is closed by a seat lock mechanism (not shown) provided at a rear portion of the accommodation box 25.

The seat 10 integrally includes a front seat 10a on which a driver (occupant) sits and a rear seat 10b on which a passenger sits. Further, a rear grip 15rg (see Fig. 3) is fixed to the rear frame portion 15r behind the seat 10 so as to be gripped by a passenger.

### <Cover Structure of Vehicle>

The motorcycle 1 includes a cover 26 formed of a resin and covering the vehicle body frame 12 or the like. The cover 26 includes, for example, an upper cover 27 covering a central portion of the handle 19, a leg shield 29 which is a vehicle body cover covering the head pipe 14 from a front side and a rear side of the head pipe 14 and covering legs of a driver who sits on the front seat 10a from the front side, the step floor 11, an under cover 30 covering the main frame 15 from a lower side, and a pair of body covers 7 covering both left and right sides of the accommodation box 25.

The motorcycle 1 further includes a front fender 4 covering the front wheel 2 from above and a rear fender 5 covering the rear wheel 3 from above.

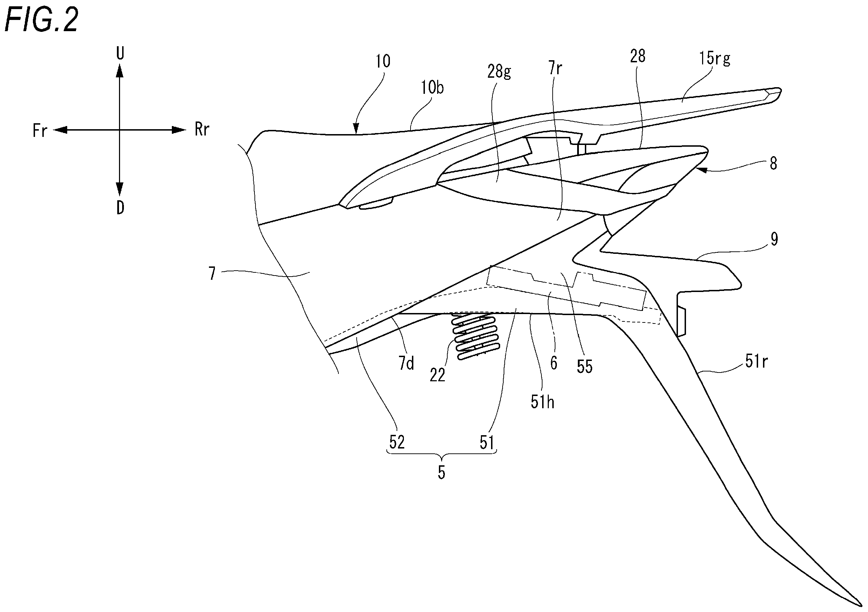

As shown in Fig. 2, the pair of left and right body covers 7 are disposed below the seat 10 and extend in an upper-lower direction and a front-rear direction. In the present embodiment, the pair of left and right body covers 7 extend in the upper-lower direction and the front-rear direction along a lower edge of the seat 10. A lower end portion 7d of the body cover 7 is formed in a rearward ascending shape which is inclined upward toward the rear side. A rear center cover 28 which is tapered rearward is provided behind the pair of left and right body covers 7.

A rear lamp unit 8, which is a lighting device at a rear side of the vehicle, is disposed at a lower end portion of the rear center cover 28.

Further, a garnish 28g is provided so as to surround a front end portion of the rear center cover 28 and a front end portion and a lower end portion of the rear lamp unit 8. A front end portion of the garnish 28g is connected to rear end portions 7r of both of the pair of left and right body covers 7.

In this manner, the pair of left and right body covers 7, the garnish 28g, the rear center cover 28, and the rear lamp unit 8 are integrated.

The rear fender 5 is provided below the pair of left and right body covers 7. The rear fender 5 is disposed above the rear wheel 3. The rear fender 5 is supported by lower end portions 7d of both of the pair of left and right body covers 7 and is provided so as to close a gap between the lower end portions 7d of both of the pair of left and right body covers 7.

The body covers 7, the rear fender 5, the rear center cover 28, or the like are appropriately fixed to a bracket fixed to the rear frame portion 15r.

As shown in Figs. 2 and 3, the rear fender 5 includes a rearward protruding portion 55 forming a space which protrudes from the lower end portions 7d of the pair of left and right body covers 7 toward the rear side of the vehicle. Further, the rear fender 5 includes a rear fender rear portion 51r which is inclined rearward and downward from a rear end of the rearward protruding portion 55 along the rear wheel 3. A license plate Np is attached to the rear fender rear portion 51r. Further, the rear fender 5 includes a license lamp cover 9 protruding rearward than the rear end of the rearward protruding portion 55 in a central region of the motorcycle 1 in the vehicle width direction. The license lamp cover 9 is disposed above the license plate Np attached to the rear fender rear portion 51r. A license lamp (not shown) is attached to the license lamp cover 9, and the license lamp emits light from above the license plate Np to the license plate Np.

The rear fender 5 includes two members, an upper portion 51 and a base portion 52.

The upper portion 51 is supported by the lower end portions 7d of both of the pair of left and right body covers 7 and includes an upper surface and side surfaces of the rearward protruding portion 55, the rear fender rear portion 51r, and the license lamp cover 9. The upper portion 51 includes an opening 51h formed such that a bottom surface of the rearward protruding portion 55 opens downward.

The base portion 52 is supported by the lower end portions 7d of both of the pair of left and right body covers 7 and includes a bottom surface portion 52d closing the opening 51h of the upper portion 51. Therefore, the bottom surface portion 52d of the base portion 52 forms the bottom surface of the rearward protruding portion 55 of the rear fender 5. Further, the bottom surface portion 52d of the base portion 52 includes a rearward descending portion 52r which is inclined downward toward a rear end.

### <Configuration of Electronic Control Unit>

The motorcycle 1 includes an electronic control unit 6 configured to control the engine 20 and a transmission device (not shown). The electronic control unit 6 is disposed inside the rearward protruding portion 55 of the rear fender 5.

Accordingly, since there is no need to ensure a space for disposing the electronic control unit 6 in a space formed by the pair of left and right body covers 7, the pair of left and right body covers 7 can be made compact, and the entire vehicle body of the motorcycle 1 can be made to look compact.

Further, since the rear fender 5 includes the upper portion 51 and the base portion 52, and the upper portion 51 includes the opening 51h formed such that the bottom surface of the rearward protruding portion 55 is opened downward, after the electronic control unit 6 is disposed inside the rearward protruding portion 55 from the opening 51h of the rear fender 5, the base portion 52 can be attached to the motorcycle 1. Accordingly, the electronic control unit 6 can be easily disposed inside the rearward protruding portion 55 of the rear fender 5.

The electronic control unit 6 is disposed below the rear lamp unit 8 and rearward from an axle 3a of the rear wheel 3. The electronic control unit 6 is disposed on an upper portion 52rs of the rearward descending portion 52r formed on the bottom surface portion 52d of the base portion 52 of the rear fender 5.

Accordingly, the electronic control unit 6 can be disposed further below. Therefore, the center of gravity of the motorcycle 1 can be lowered. Further, since the space above the electronic control unit 6 can be made large, the rear lamp unit 8 or the like can be disposed in this space, and the length of the motorcycle 1 in the front-rear direction can be shortened without heightening the center of gravity of the motorcycle 1.

In the present embodiment, the rear lamp unit 8 and the electronic control unit 6 are disposed such that the front end portion of the rear lamp unit 8 is located forward than a rear end portion of the electronic control unit 6.

Accordingly, the rear lamp unit 8 can be disposed further forward, and the length of the motorcycle 1 in the front-rear direction can be shortened.

Although the embodiment of the present invention has been described above, the present invention is not limited to the above-described embodiment, and modifications, improvements, or the like can be made as appropriate.

For example, the rear fender 5 includes the upper portion 51 and the base portion 52 (two members) in the present embodiment, but the present invention is not necessarily limited to this configuration.

Further, for example, the rear lamp unit 8 and the electronic control unit 6 are disposed so as to overlap each other in the front-rear direction in the present embodiment, but the present invention is not necessarily limited to such a configuration.

Further, for example, the opening 51h is provided below the rearward protruding portion 55 in the present embodiment, but the present invention is not necessarily limited to such a structure. A structure in which an opening which makes the operation of attaching the electronic control unit 6 easy is provided on a side surface of the rear fender 5, and the opening is closed after the electronic control unit 6 is disposed inside the rearward protruding portion 55 may be adopted.

Further, the motorcycle 1 has been described in the present embodiment, but the inventive concept of present invention may be applied to other saddle-type vehicles .

At least the following matters are described in the present specification. Components corresponding to the above-described embodiment are shown in parentheses, but the present invention is not limited thereto. The scope of the invention is defined and limited by the appended claims.

## Claims

1. A saddle-type vehicle (1) comprising:
a pair of left and right body covers (7) disposed below a seat (10) on which an occupant sits and extending in an upper-lower direction and a front-rear direction;
a rear fender (5) connected to lower end portions (7d) of both of the pair of left and right body covers (7) and disposed above a rear wheel (3); and
an electronic control unit (6),
wherein the rear fender (5) includes a rearward protruding portion (55) protruding from the lower end portions (7d) of the pair of left and right body covers (7) toward a rear side of the vehicle,
wherein the electronic control unit (6) is disposed inside the rearward protruding portion (55) of the rear fender (5),
**characterized in that** the rear fender (5) includes:
an upper portion (51) supported by the lower end portions (7d) of the pair of left and right body covers (7), and including an opening (51h) which is formed such that at least a part of the rearward protruding portion (55) opens downward; and
a base portion (52) including a bottom surface portion (52d) which is configured to close the opening (51h) of the upper portion (51), and
that the electronic control unit (6) is disposed on the base portion (52),
wherein the bottom surface (52d) of the base portion (52) includes a rearward descending portion (52r) inclined downward toward a rear end, and
wherein the electronic control unit (6) is disposed on an upper portion (52rs) of the rearward descending portion (52r).

2. The saddle-type vehicle (1) according to claim 1, further comprising:
a rear lamp unit (8) disposed at a rear side of the pair of left and right body covers (7),
wherein the electric control unit (6) is disposed below the rear lamp unit (8), and
wherein the rear lamp unit (8) and the electronic control unit (6) are disposed such that a front end portion of the rear lamp unit (8) is located forward than a rear end portion of the electronic control unit (6).

## Patentansprüche

1. Sattel-Typ-Fahrzeug (1), welches aufweist:
ein Paar linker und rechter Rumpfabdeckungen (7), die unter einem Sitz (10) angeordnet sind, auf dem ein Fahrer sitzt, und die sich in einer Oben-Unten-Richtung und einer Vorne-Hinten-Richtung erstrecken;
einen hinteren Fender (5), der mit unteren Endabschnitten (7d) beider des Paars linker und rechter Rumpfabdeckungen (7) verbunden ist und über einem Hinterrad (3) angeordnet ist; und
eine elektronische Steuereinheit (6),
wobei der hintere Fender (5) einen nach hinten vorstehenden Abschnitt (55) enthält, der von den unteren Endabschnitten (7d) des Paars linker und rechter Rumpfabdeckungen (7) zur Rückseite des Fahrzeugs hin vorsteht,
wobei die elektronische Steuereinheit (6) innerhalb des nach hinten vorstehenden Abschnitts (55) des hinteren Fenders (5) angeordnet ist,
**dadurch gekennzeichnet, dass** der hintere Fender (5) enthält:
einen oberen Abschnitt (51), der von den unteren Endabschnitten (7d) des Paars linker und rechter Rumpfabdeckungen (7) getragen ist und eine Öffnung (51h) enthält, die derart ausgebildet ist, dass zumindest ein Teil des nach hinten vorstehenden Abschnitts (55) nach unten offen ist; und
einen Basisabschnitt (52), der einen Bodenflächenabschnitt (52d) enthält, der konfiguriert ist, um die Öffnung (51h) des oberen Abschnitts (51) zu verschließen, und
dass die elektronische Steuereinheit (6) auf dem Basisabschnitt (52) angeordnet ist,
wobei die Bodenfläche (52d) des Basisabschnitts (52) einen nach hinten abfallenden Abschnitt (52r) enthält, der zu einem hinteren Ende hin nach unten geneigt ist, und
wobei die elektronische Steuereinheit (6) auf einem oberen Abschnitt (52rs) des nach hinten abfallenden Abschnitts (52r) angeordnet ist.

2. Das Sattel-Typ-Fahrzeug (1) nach Anspruch 1, das ferner aufweist:
eine Hecklampeneinheit (8), die an einer Rückseite des Paars linker und rechter Rumpfabdeckungen (7) angeordnet ist,
wobei die elektronische Steuereinheit (6) unter der Hecklampeneinheit (8) angeordnet ist, und
wobei die Hecklampeneinheit (8) und die elektronische Steuereinheit (6) derart angeordnet sind, dass ein vorderer Endabschnitt der Hecklampeneinheit (8) weiter vorne angeordnet ist als ein hinterer Endabschnitt der elektronischen Steuereinheit (6).

## Revendications

1. Véhicule de type à selle (1) comprenant :
une paire de capots de corps gauche et droit (7) disposés sous un siège (10) sur lequel un occupant est assis et s'étendant dans une direction haut-bas et une direction avant-arrière ;
un garde-boue arrière (5) relié à des portions d'extrémité inférieures (7d) de la paire de capots de corps gauche et droit (7) et disposé au-dessus d'une roue arrière (3) ; et
une unité de commande électronique (6),
dans lequel le garde-boue arrière (5) comporte une portion faisant saillie vers l'arrière (55) faisant saillie depuis les portions d'extrémité inférieures (7d) de la paire de capots de corps gauche et droit (7) vers un côté arrière du véhicule,
dans lequel l'unité de commande électronique (6) est disposée à l'intérieur de la portion faisant saillie vers l'arrière (55) du garde-boue arrière (5),
**caractérisé en ce que** le garde-boue arrière (5) comporte :
une portion supérieure (51) supportée par les portions d'extrémité inférieures (7d) de la paire de capots de corps gauche et droit (7), et comportant une ouverture (51h) qui est formée de telle sorte qu'au moins une partie de la portion faisant saillie vers l'arrière (55) s'ouvre vers le bas ; et
une portion base (52) comportant une portion de surface de fond (52d) qui est conçue pour fermer l'ouverture (51h) de la portion supérieure (51), et
que l'unité de commande électronique (6) est disposée sur la portion base (52),
dans lequel la surface de fond (52d) de la portion base (52) comporte une portion descendant vers l'arrière (52r) inclinée vers le bas vers une extrémité arrière, et
dans lequel l'unité de commande électronique (6) est disposée sur une portion supérieure (52rs) de la portion descendant vers l'arrière (52r).

2. Véhicule de type à selle (1) selon la revendication 1, comprenant en outre :
une unité de lampe arrière (8) disposée au niveau d'un côté arrière de la paire de capots de corps gauche et droit (7),
dans lequel l'unité de commande électrique (6) est disposée sous l'unité de lampe arrière (8), et
dans lequel l'unité de lampe arrière (8) et l'unité de commande électronique (6) sont disposées de telle sorte qu'une portion d'extrémité avant de l'unité de lampe arrière (8) est située plus en avant qu'une portion d'extrémité arrière de l'unité de commande électronique (6).
